# EUROPEAN PATENT SPECIFICATION

(11) **EP 1 831 311 B1**
(45) Date of publication and mention of the grant of the patent: **21.05.2008**
(21) Application number: 05803746.6
(22) Date of filing: 08.11.2005
(51) Int. Cl.: C08L 97/02, C08K 5/20

(54) **CELLULOSE FIBER-PLASTIC COMPOSITION CONTAINING A LUBRICANT**
CELLULOSEFASER-KUNSTSTOFF-ZUSAMMENSETZUNG MIT EINEM GLEITMITTEL
COMPOSITION A BASE DE PLASTIQUE ET DE FIBRES CELLULOSIQUES CONTENANT UN LUBRIFIANT

(30) Priority: 08.11.2004 US 984370
(43) Date of publication of application: 12.09.2007
(73) Proprietor: LONZA, INC., Allendale, NJ 07401-1613 (US)
(72) Inventor: WILLIAMS, Joseph, B., Westfield, IN 46074-9377 (US); GEICK, Kenneth, S., Mercerville, NJ 08619-2743 (US); TAFESH, Ahmed, M., Allentown, PA 18104-9051 (US); JIANG, Xiao, Emerson, NJ 07630-1736 (US)
(74) Representative: Riegler, Norbert Hermann
(86) International application number: PCT/EP2005/011944
(87) International publication number: WO 2006/048332

(56) References cited:
- EP-A- 0 453 010
- US-A- 3 145 187
- US-A- 5 028 675

## Description

The invention relates to polymer-cellulosic fiber compositions containing a lubricant based on *N*,*N*-bisalkanoylethylenediamines. It further relates to a process for preparing extruded polymer-cellulosic fiber compositions and the extruded compositions that are by said process. Another object of the invention is the use of certain *N,N*-bisallcanoylethylenediamines as lubricants in polymer-cellulosic fiber compositions.

With the rising cost of wood and the shortage of mature trees, there is a present need to find good quality substitutes for wood which will continue long into the future. Additionally, good quality wood substitutes are more durable and longer lasting than wood since they are less susceptible to termite destruction and wood rot.

Over the past several years a growing market has emerged for the use of polymer-wood composites to replace traditional solid wood products in applications such as decking, windows, fencing, automobile interiors and pallets. One key to achieving a high quality polymer-wood composite is a thorough dispersion of cellulosic fiber in a polymer matrix. To achieve this, many leading producers of polyethylene-wood decking have found lubricants to be essential.

Agricultural residues are the parts of the plant that remain in the fields after a crop is harvested. Examples of such residues include, but are not limited to, those parts of the plant left in the fields (such as straw) after the harvesting of wheat, oat, rice, and corn. After harvest, the agricultural residues are usually burned or plowed into the ground as compost. In place of burning or plowing these residues into the ground, these annually renewable lignocellulosic fibers or lignocellulosics have an outstanding potential of being used as a fiber source in the production of a non-wood fiber composites.

US 6,011,091 teaches a cellulosic composite containing from 60 to 70% cellulosic material, from 30 to 40% polyvinyl chloride material and up to 4% by weight of polar thermosetting material. Common commercial lubricants such as calcium stearate, esters, paraffin wax and amide wax can be used. However, vinyl-chloride based thermoplastics are generally more difficult to process than olefin based thermoplastics.

US 6,066,680 describes an extruded composite formed from foamable plastic containing a polymer resin and wood flour particles. A two step process is taught wherein the wood flour particles are encapsulated by the resin and pelletized, and then the pelletized pieces are mixed with additional resin and blowing agents. Lubricants such as stearic acid, calcium stearate, ester wax, and AC-629A Oxidized Polyethylene wax can be included.

The polymer resins described are polyvinyl chloride, chlorinated polyvinyl chloride and polystyrene.

US 6,103,791, which is a continuation of US 6,011,091 discloses a cellulosic composite containing from 50 to 65% cellulosic material, from 25 to 30% polyvinyl chloride material and up to 4% by weight of polar thermosetting material. These composites are considered to have improved weatherability. Also, they appear to adhere better to the wood material without the need for adhesives or tie layers.

Therefore, a present need exists for a superior polymer-wood composite based on an easily processable polymer which has better weatherability and dimensional stability than contemporary products on the market.

This invention is directed to an extrudable and extruded polymer-cellulosic fiber composition comprising a polymer, e.g., high density polyethylene (HDPE) admixed with cellulosic fiber and a lubricant comprising a mixture of *N*,*N*'-bisalkanoylethylenediamines independently containing from 8 to 14 carbons in each alkanoyl group. The composition of the invention contains from 70 to 30 wt% and preferably from 60 to 40 wt.% of cellulosic fiber, based upon the weight of the total composition, admixed with 30 to 70 wt.%, preferably from 40 to 60 wt.%, of polymer. It has been discovered that mixtures of *N*,*N*'-bisalkanoylethylenediamines independently containing from 8 to 14 carbons in each alkanoyl group are better lubricants than the current ethylene bisstearamide (EBS)/zinc stearate (ZnSt) blends used in wood.

The advantages of these lubricants versus the prior art EBS/ZnSt blends are increased output at a given extruder torque, reduced temperatures in the extruder, improved dimensional stability of extruded profiles, and improved appearance of extruded profiles. The lubricants used in the composition of the invention improve the internal and external lubricity of the plastic blends. The internal lubricity enhances the dispersion of the reinforcing filler in the polymer, thus improving the physical properties and increasing the extruder output. The principal benefit of the external lubricity is to improve the surface appearance of the extruded article by reducing the force needed to move the extrudable composition through the die.

The composition contains from 1 to 7 wt.% of lubricant based upon the weight of the total composition. Preferred embodiments contain from 2 to 4 wt.% lubricant for HDPE/pine composites and from 3 to 6 wt.% lubricant for HDPE/oak composites.

The mixtures of *N,N'*-bisalkanoylethylenediamines may be derived from mixtures of carboxylic acids having 8 to 14 carbon atoms, or derivatives thereof such as acid chlorides or anhydrides. Therefore the two alkanoyl groups in each *N,N'*-bisalkanoylethylenediamine molecule may be the same or different, the relative proportion of each component depending on the composition of the carboxylic acid starting material.

Preferably, the lubricant comprises at least one *N,N*'-bisall:anoylethylenediamine containing 12 carbon atoms in at least one alkanoyl group.

More preferably, the mixture of *N,N*'-bisalkanoylethylenediamines in the lubricant comprises at least one each of the *N,N'* -bisalkanoylethylenediamines containing 8, 10, 12 and 14 carbon atoms, respectively, in at least one of their alkanoyl groups, corresponding to a composition of the carboxylic acid starting material that contains at least one each of the carboxylic acids having 8, 10, 12 and 14 carbon atoms, respectively.

Most preferably, the most abundant alkanoyl group in the mixture of *N,N'-*bisalkanoylethylenediamines is an alkanoyl group containing 12 carbon atoms, corresponding to a carboxylic acid starting material containing a C₁₂ carboxylic acid, e.g., lauric acid, as main component.

In a preferred embodiment, the lubricant is solid at room temperature and its particle size is from 90 to 150 *µ*m, more preferably from 120 to 140 *µ*m.

The effective melting temperature of the lubricant, at a heating rate of 100 °C per minute during extrusion, is preferably less than 160 °C.

The polymers used in the compositions of the invention are preferably virgin polymers which include, but are not limited to, polyolefins and polyvinyl compounds, as for example HDPE, LDPE, LLDPE, UHMWPE, polypropylene (homo- and copolymer), PVC, and combinations thereof. A particularly preferred polyolefin is high density polyethylene (HDPE). Suitable HDPEs are, for example, available as ''barefoot'' (no additives) reactor powders, e.g. Equistar^{®} Petrothene^{®} LB01 00-00 having a 0.4 Melt Index (MI). This polyolefin is a product from Equistar^{®} Chemicals LP of Houston, Texas.

A wide variety of cellulosic fibers can be employed in the process of the present invention. Illustrative cellulosic fibers include, but are not limited to, wood and wood products, such as wood pulp fibers; non-woody paper-making fibers from cotton, from straws and grasses, such as rice and esparto, from canes and reeds, such as bagasse, from bamboos, from stalks with bast fibers, such as jute, flax, kenaf, cannabis, linen and ramie, and from leaf fibers, such as abaca and sisal. One or more cellulosic fibers may be used. Preferably, the cellulosic fiber used is from a wood source. Suitable wood sources include softwood sources such as pines, spruces, and firs, and hardwood sources such as oaks, maples, eucalyptuses, poplars, beeches, and aspens.

The cellulosic fibers may also include agricultural wastes. Examples include, but are not limited to, straw, corn stalks, rice hulls, wheat, barley and oat chaff, coconut shells, peanut shells, walnut shells, jute, hemp, bagasse, bamboo, flax, and kenaf, and combinations thereof

The cellulosic fibers may be screened through various screens, e.g., a 30-mesh or a 40-mesh screen, to obtain a mixture of different size fibers. The size of the fibers used in the composition of the invention range from 10 to 100 mesh, and preferably from 40 to 100 mesh.

The wood flours used in the composition of the invention include soft and hard woods and combinations thereof. Preferable wood flours are oak and pine, available as Oak 4037 (40 mesh) and Pine 402050 (40 mesh) respectively from American Wood Fibers of Schofield, Wisconsin. Another preferred wood flour is maple.

Preferably, the polymer-cellulosic fiber composition of the invention contains 60 to 40 wt. % of the cellulosic fiber.

In a preferred embodiment, the polymer-cellulosic fiber composition of the invention contains 2 to 4 wt. % of the lubricant, the polymer is a high-density polyethylene, and the cellulosic fiber is pine wood flour.

In another preferred embodiment, the polymer-cellulosic fiber composition of the invention contains 3 to 6 wt. % of the lubricant, the polymer is a high-density polyethylene, and the cellulosic fiber is oak wood flour.

Preferably, polymer-cellulosic fiber composition of the invention contains 40 to 60 wt. % of the polymer.

The polymer-cellulosic fiber compositions of the invention may further contain additives such as coupling, compatibilizing, or mixing agents which may advantageously be present in the composition. These additives may be present in an amount of from 0.01 to 20 wt.% based on the total weight of the composition, preferably 0.1 to 10 wt.%, and most preferably from 0.2 to 5 wt.% to achieve improvements in the physical, mechanical and thermal characteristics of the materials. A preferred compatibilizer is maleated polypropylene. Another preferred compatibilizer is maleated HDPE.

A particularly preferred additive is talc which may be present in an amount from 2% to 10%, based on the total weight of the composition.

Other additives can be used, including viscosity stabilizers, inorganic fillers, processing aids, and coloring agents.

The *N*,*N*'-bisalkanoylethylenediamines independently contain 8 to 14 carbon atoms in each alkanoyl group and have the formula: 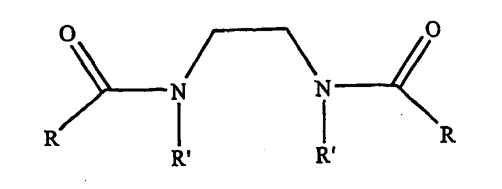 wherein each -C(=O)R moiety contains 8 to 14 carbon atoms and R' is H or C₁₋₈ alkyl. Preferred *N*,*N*'-bisalkanoylethylenediamines are *N*,*N*'-bisoctanoylethylenediamine, *N,N'* bis-decanoylethylenediamine, *N*,*N*'-bisdodecanoylethylenediamine, *N,N'* bistetradecanoylethylenediamine and combinations thereof.

The solid lubricants of the invention can be spray-chilled or prilled to form particles having a size range of from 90 to 150 µm, preferably from 120 to 140 µm. It has been discovered that these particles have a lower effective melting temperature when admixed with polymer-cellulosic fiber composites and that the composite can be extruded at higher speeds in contrast to composites made with a lubricant having a larger particle size. The use of a solid lubricant within the foregoing particle size range results in a composite with a more uniform extruded profile. In the spray-chilling process, the materials are heated above their melting point and then atomized into a stream of chilled air which causes the atomized droplets to solidify.

Another embodiment of the invention is a process for the preparation of a polymer-cellulosic composition which comprises
a) forming an admixture of from 30 to 70 wt.% polymer, from 70 to 30 wt.% cellulosic fiber, and from 1 to 7 wt.% of a lubricant comprising a mixture of *N*,*N*'-bisalkanoylethylenediamines containing from 8 to 14 carbon atoms in each alkanoyl group;
b) drying the mixture obtained in step (a) to a moisture level of less than 2 wt.%;
c) extruding the mixture obtained in step (b) at a temperature not more than 170 °C;
d) passing the extruded profile through a cooling chamber; and
e) cutting and collecting the extrudate.

The drying step (b) may, for example, be carried out during 10 to 16 hours at a temperature from 100 to 120 °C and at vacuum of from 680 to 720 mm Hg to obtain a moisture (water) content of less than 2 wt.% based on the total weight of the composition.

The cooling chamber in step (d) may advantageously be equipped with a plurality of water sprays.

The cellulosic fiber in the process of the invention is preferably selected from the group consisting of oak, pine and maple wood, straw, corn stalks, rice hulls, wheat, barley and oat chaff, coconut shells, peanut shells, walnut shells, jute, hemp, bagasse, bamboo, flax, kenaf, and any combination of any of the foregoing.

It has been found that the cellulosic fiber is preferably a mixture of fibers varying in size from 10 to 100 mesh.

The polymer in the process of the invention is preferably a high density polyethylene.

The polymer-cellulosic fiber composition in the process of the invention preferably contains from 60 to 40 wt. % of the cellulosic fiber.

The polymer-cellulosic fiber composition in the process of the invention preferably contains from 40 to 60 wt. % of the polymer.

In a preferred embodiment of the process of the invention, the polymer-cellulosic fiber composition contains from 2 to 4 wt. % of the lubricant, the polymer is a high-density polyethylene, and the cellulosic fiber is pine wood flour.

In another preferred embodiment of the process of the invention, the polymer-cellulosic fiber composition contains from 3 to 6 wt. % of the lubricant, the polymer is a high-density polyethylene, and the cellulosic fiber is oak wood flour.

Still another embodiment of the invention is an extruded composition prepared by the aforementioned process.

In addition to extrusion, the compositions of this invention may be injection molded to produce commercially usable products. The resultant product has an appearance similar to wood and may be sawed, sanded, shaped, turned, fastened and/or finished in the same manner as natural wood. It is resistant to rot and decay as well as termite attack and may be used, for example, as decorative moldings inside or outside of a house, picture frames, furniture, porch decks, window moldings, window components, door components, roofing systems and other types of structural members.

Still another embodiment of the invention is the use of a mixture of compounds having the formula: 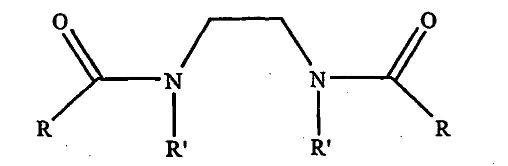 wherein each -C(=O)R moiety independently is C₈₋₁₄ alkanoyl and R' is H or C₁₋₈ alkyl, having a particle size range from 90 to 150 µm, preferably from 120 to 140 µm, as a lubricant in polymer-cellulosic fiber compositions.

In a preferred use, the -C(=O)R moieties are independently selected from the group consisting of capryloyl (octanoyl), caprinoyl (decanoyl), lauroyl (dodecanoyl) and myristoyl (tetradecanoyl).

### Brief Description of the Drawings

Figure 1 shows the effect on process ease of compositions containing lubricants A in a HDPE/oak flour composite.
Figure 2 shows the effect of compositions containing lubricant A in a HDPE/oak flour composite on zone 3 temperatures.
Figure 3 shows the effect on process ease of compositions containing lubricant B at various loading levels in a HDPE/oak flour composite.
Figure 4 shows the effect on process ease of compositions containing lubricants B and POE 40 sorbitol hexatallate in a HDPE/oak flour/filler composite.

The following examples illustrate the invention without limitation. Examples 1 and 2 apply to all cellulosic compositions. All parts and percentages are given by weight unless otherwise indicated.

### Preparation of the lubricant particles:

The lubricants were prepared by spray-chilling using a 25/30 SS nozzle operated at a temperature of 160 to 180 °C and a pressure of 2344 to 2413 kPa (340 to 350 psi). This process resulted in the desired solid lubricant particles which, at a heating rate of 100 °C per minute, have a melting point of from 145 to 155 °C, preferably, about 150 °C.

### Extrusion process:

In all of the examples, the composition materials were mixed in a ten liter Henschel mixer for about three minutes at 1800 rpm. After mixing, the composites were dried for 16 hours at 100 °C in vacuum ovens at about 90.7 to 96.0 kPa (680 to 720 mm Hg) vacuum. The dried compositions were extruded through a rectangular profile through a 3 8.1 x 12.7 mm die in a 30 mm Werner & Pfleiderer co-rotating twin screw extruder. The extruder set temperature profile from the feed section to the die was 140 °C, 150 °C, 150 °C, 150 °C, 140 °C. The composition material was fed to the extruder using a K-Tron S200 volumetric single screw feeder with a set feed rate ranging from about 10 kg/h to 20 kg/h. The screw speed was set at 175 rpm. The extruded profile passed through a 0.65 m cooling chamber containing three sets of water sprays before being cut and collected.

The required extruder torque (given in percent of maximum torque) and the extruded output are combined in a "process ease" variable, which is defined as extruded output (kg/h) divided by the % torque. The actual temperatures in zone 3 are noted because zone 3 is the area of highest shear in the extruder and temperature increases due to increased shear can cause the actual temperature to be greater then the set temperature.

### Examples 1-3

### HDPE-Oak wood flour

In examples 1 3, the extrudable composition contained 40% HDPE copolymer reactor powder (Equistar^{®} Petrothene^{®} LB 0100-00) and 60% Oak 4037 (40 mesh) available from American Wood Fibers of Schofield, Wisconsin.

The control composition contained a mixture of approximately 1:1 of EBS and ZnSt added separately to the composition (designated as "mixed separately").

Table 1 show the compositions which are within the scope of the instant invention.

**TABLE 1 (Compositions of the Invention)**

| **Lubricant System** | **Lubricant Composition** |
|---|---|
| A | *N*,*N*'-bisdodecanoylethylenediamine |
| B | Reaction product of ethylene diamine and an acid mixture containing 45 to 51 % lauric acid, 17 to 20% myristic acid, and 5 to 10% of both caprylic and capric acids |

| | |
|---|---|
| ¹POE is polyoxyethylene. | |

### Example 1

### HDPE-Oak wood flour

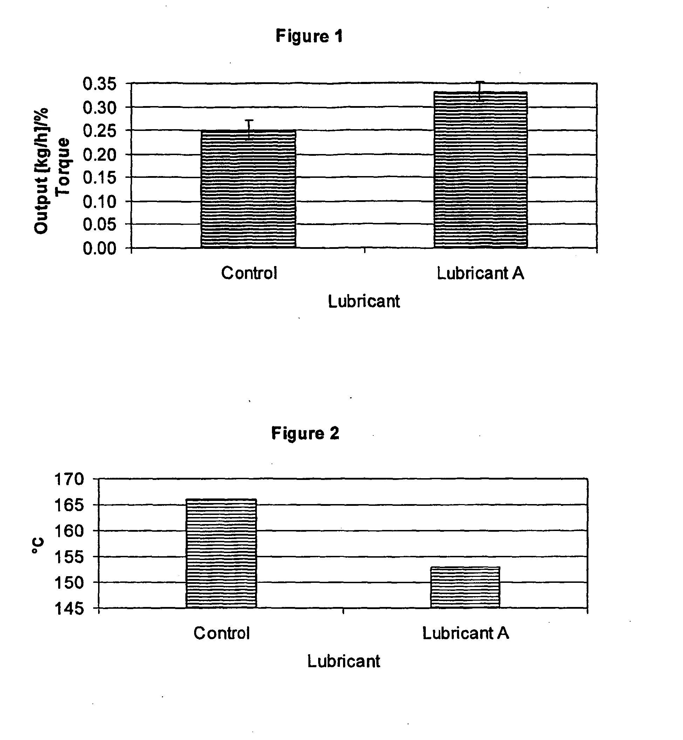

In this example, various amounts of the control lubricant and lubricant A were added to the extrudable composition. The results for these lubricant packages in HDPE/Oak Flour using feed rates between 11 and 18 kg/h are shown in Figures 1 and 2.

The process ease values are shown in Figure 1. Lubricant A had a process ease value 33% greater than the EBS/ZnSt control.

The extruder zone 3 temperatures are shown in Figure 2. Lubricant A resulted in a temperature 13°C lower than that for the control. This indicates that the composition containing lubricant A provides significantly better internal lubrication and hence less shear than with the control lubricant.

### Example 2

### HDPE-Oak wood flour

In this example, lubricant B was evaluated at various loading levels whereas the EBS/ZnSt control was maintained at a constant loading level. Lubricant B is the reaction product of ethylene diamine and an acid mixture containing 45 to 51% lauric acid, 17 to 20% myristic acid, and 5 to 10% of both caprylic and capric acids.

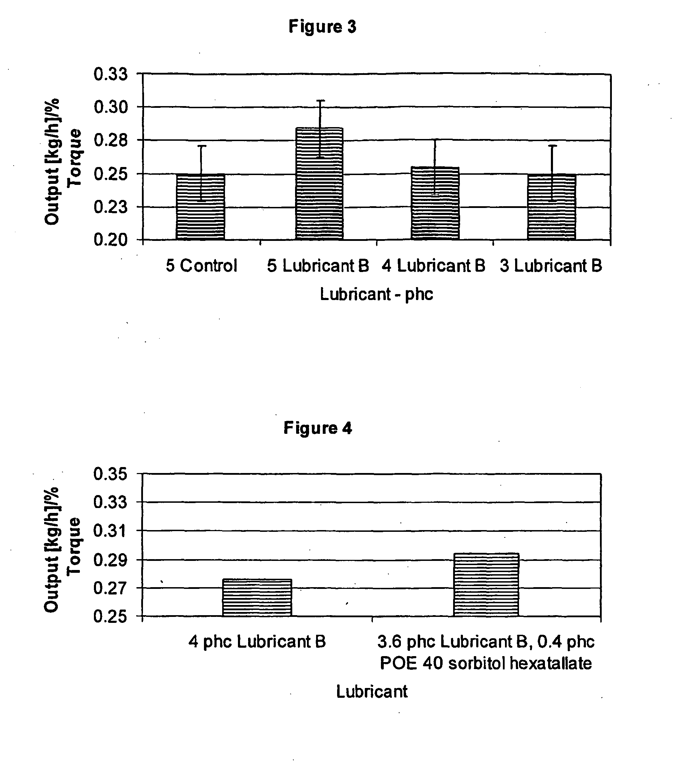

The results in HDPE/Oak Flour at a feed rate of 18 kg/h are shown in Figure 3. The control lubricant package consisted of 2.5 phc EBS and 2.5 phc ZnSt. Lubricant B was evaluated at 3, 4, and.5 phc. At equal total loadings of lubricant (5 phc), lubricant B had almost a 14% increase in the output per % extruder torque. At 4 phc lubricant B versus 5 phc of control lubricant, lubricant B resulted in a slightly higher output per % extruder torque. At 3 phc lubricant B versus 5 phc control lubricant (40% less lubricant), lubricant B resulted in equal outputs per % extruder torque.

### Example 3

### HDPE-Oak wood flour (and other fillers)

In this example, the extrudable composition was a product obtained from TimberTech. It is one of their commercially extrudable products without a lubricant. It is thought to contain a HDPE to oak wood flour ratio of about 45:55 and 5 to 10% talc. Lubricant B and a mixture of lubricant B and POE 40 sorbitol hexatallate were added to the material at 4 phc and the mixtures were extruded at 14 kg/hr. The ratio of lubricant B to POE 40 sorbitol hexatallate was 9:1. The results are shown in Figure 4.

The mixture of lubricant B and POE 40 sorbitol hexatallate resulted in a 6.6% higher output than lubricant B by itself.

## Claims

1. A polymer-cellulosic fiber composition comprising an admixture of 30 to 70 wt% polymer, 70 to 30 wt.% cellulosic fiber material, and from 1 to 7 wt.% lubricant, said lubricant comprising a mixture of *N,N'*-bisalkanoylethylenediamines independently containing from 8 to 14 carbon atoms in each alkanoyl group.

2. The polymer-cellulosic fiber composition of claim 1, wherein the lubricant comprises at least one *N,N'* -bisalkanoylethylenediamine containing 12 carbon atoms in at least one alkanoyl group.

3. The polymer-cellulosic fiber composition of claim 1 or 2, wherein the mixture of *N*,*N*'-bisalkanoylethylenediamines comprises at least one each of the *N*,*N*'-bisalkanoylethylenediamines containing 8, 10, 12 and 14 carbon atoms, respectively, in at least one of their alkanoyl groups.

4. The polymer-cellulosic fiber composition of any of claims 1 to 3, wherein the most abundant alkanoyl group in the mixture of *N*,*N*'-bisalkanoylethylenediamines is an alkanoyl group containing 12 carbon atoms.

5. The polymer-cellulosic fiber composition of any of claims 1 to 4, wherein the lubricant is a solid and the particle size of the lubricant is from 90 to 150 µm, preferably from 120 to 140 µm.

6. The polymer-cellulosic fiber composition of any of claims 1 to 5, wherein the effective melting temperature of the lubricant, at a heating rate of 100 °C per minute during extrusion, is less than 160 °C.

7. The polymer-cellulosic fiber composition of any of claims 1 to 6, wherein the polymer is a high density polyethylene.

8. The polymer-cellulosic fiber composition of any of claims 1 to 7, wherein the cellulosic fiber material is selected from fiber materials derived from oak, pine or maple wood, from straw, corn stalks or rice hulls, from wheat, barley or oat chaff, from coconut, peanut or walnut shells, from jute, hemp, bagasse, bamboo, flax, kenaf, or any combination of any of the foregoing.

9. The polymer-cellulosic fiber composition of any of claims 1 to 8, wherein the cellulosic fiber is wood fiber.

10. The polymer-cellulosic fiber composition of any of claims 1 to 9, wherein the composition contains 60 to 40 wt% of the cellulosic fiber.

11. The polymer-cellulosic fiber composition of any of claims 1 to 10, wherein the composition contains 2 to 4 wt.% of the lubricant, the polymer is a high-density polyethylene, and the cellulosic fiber is pine wood flour.

12. The polymer-cellulosic fiber composition of any of claims 1 to 10, wherein the composition contains 3 to 6 wt.% of the lubricant, the polymer is a high-density polyethylene, and the cellulosic fiber is oak wood flour.

13. The polymer-cellulosic fiber composition of any of claims 1 to 12, wherein the composition contains 40 to 60 wt.% of the polymer.

14. The polymer-cellulosic fiber composition of any of claims 1 to 13, further comprising from 2% to 10 wt.% talc.

15. A process for preparing an extruded polymer-cellulosic fiber composition, comprising:
a) forming an admixture of from 30 to 70 wt.% polymer, from 70 to 30 wt.% cellulosic fiber, and from 1 to 7 wt.% of a lubricant comprising a mixture of *N,N'* -bisalkanoylethylenediamines containing from 8 to 14 carbon atoms in each alkanoyl group;
b) drying the mixture obtained in step (a) to a moisture level of less than 2 wt.%;
c) extruding the mixture obtained in step (b) at a temperature not more than 170 °C;
d) passing the extruded profile through a cooling chamber; and
e) cutting and collecting the extrudate.

16. The process according to claim 15, wherein the cellulosic fiber is oak, pine, maple, straw, corn stalks, rice hulls, wheat, barley and oat chaff, coconut shells, peanut shells, walnut shells, jute, hemp, bagasse, bamboo, flax, kenaf, or a combination thereof.

17. The process of claim 15 or 16, wherein the cellulosic fiber is a mixture of fibers varying in size from 10 to 100 mesh.

18. The process according to any of claims 15 to 17, wherein the polymer is high density polyethylene.

19. The process according to any of claims 15 to 18, wherein the polymer-cellulosic fiber composition contains from 60 to 40 wt.% of the cellulosic fiber.

20. The process according to any of claims 15 to 19, wherein the polymer-cellulosic fiber composition contains from 40 to 60 wt.% of the polymer.

21. The process according to any of claims 15 to 20, wherein the polymer-cellulosic fiber composition contains from 2 to 4 wt.% of the lubricant, the polymer is a high-density polyethylene, and the cellulosic fiber is pine wood flour.

22. The process according to any of claims 15 to 20, wherein the polymer-cellulosic fiber composition contains from 3 to 6 wt.% of the lubricant, the polymer is a high-density polyethylene, and the cellulosic fiber is oak wood flour.

23. An extruded polymer-cellulosic fiber composition obtainable by the process of any of claims 15 to 22.

24. Use of a mixture of compounds having the formula: 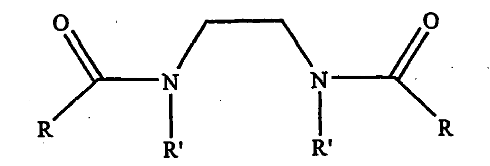 wherein each -C(=O)R moiety independently is C₈₋₁₄ alkanoyl and R' is H or C₁₋₈ alkyl, having a particle size range from 90 to 150 µm, preferably from 120 to 140 µm, as a lubricant in polymer-cellulosic fiber compositions.

25. The use according to claim 24, wherein the -C(=O)R moieties are independently selected from the group consisting of capryloyl, caprinoyl, lauroyl and myristoyl.

## Patentansprüche

1. Zusammensetzung von Polymer und cellulosehaltiger Faser, ein Gemisch von 30 bis 70 Gew.-% Polymer, 70 bis 30 Gew.-% cellulosehaltigem Fasermaterial und 1 bis 7 Gew.-% Gleitmittel umfassend, wobei das Gleitmittel ein Gemisch von *N*,*N'*-Bis-alkanoylethylendiaminen umfasst, in welchen die Alkanoylgruppen unabhängig voneinander jeweils 8 bis 14 Kohlenstoffatome enthalten.

2. Zusammensetzung von Polymer und cellulosehaltiger Faser nach Anspruch 1, worin das Gleitmittel mindestens ein *N,N'* -Bisalkanoylethylendiamin umfasst, das in wenigstens einer Alkanoylgruppe 12 Kohlenstoffatome enthält.

3. Zusammensetzung von Polymer und cellulosehaltiger Faser nach Anspruch 1 oder 2, worin das Gemisch von *N,N*'-Bisalkanoylethylendiaminen jeweils mindestens eines derjenigen *N,N*'-Bisalkanoylethylendiamine umfasst, welche 8, 10, 12 oder 14 Kohlenstoff atome in wenigstens einer ihrer Alkanoylgruppen enthalten.

4. Zusammensetzung von Polymer und cellulosehaltiger Faser nach einem der Ansprüche 1 bis 3, worin die am häufigsten vorkommende Alkanoylgruppe in der Mischung von *N*,*N*'-Bisalkanoylethylendiaminen eine 12 Kohlenstoffatome enthaltende Alkanoylgruppe ist.

5. Zusammensetzung von Polymer und cellulosehaltiger Faser nach einem der Ansprüche 1 bis 4, worin das Gleitmittel ein Feststoff ist und die Teilchengrösse des Gleitmittels 90 bis 150 µm und vorzugsweise 120 bis 140 µm beträgt.

6. Zusammensetzung von Polymer und cellulosehaltiger Faser nach einem der Ansprüche 1 bis 5, worin die effektive Schmelztemperatur des Gleitmittels bei einer Aufheizgeschwindigkeit von 100 °C pro Minute während der Extrusion weniger als 160 °C beträgt.

7. Zusammensetzung von Polymer und cellulosehaltiger Faser nach einem der Ansprüche 1 bis 6, worin das Polymer ein Polyethylen hoher Dichte ist.

8. Zusammensetzung von Polymer und cellulosehaltiger Faser nach einem der Ansprüche 1 bis 7, worin das cellulosehaltige Fasermaterial ausgewählt ist aus Fasermaterialien, die aus Eichen-, Kiefern- oder Ahornholz, Stroh, Maisstängeln oder Reisspelzen, Weizen-, Gerste- oder Haferspreu, Kokosnuss-, Erdnuss- oder Walnussschalen, Jute, Hanf, Bagasse, Bambus, Flachs, Kenaf oder irgendeiner Kombination irgendwelcher der vorstehend genannten gewonnen wurden.

9. Zusammensetzung von Polymer und cellulosehaltiger Faser nach einem der Ansprüche 1 bis 8, worin die cellulosehaltige Faser Holzfaser ist.

10. Zusammensetzung von Polymer und cellulosehaltiger Faser nach einem der Ansprüche 1 bis 9, worin die Zusammensetzung 60 bis 40 Gew.-% cellulosehaltige Faser enthält.

11. Zusammensetzung von Polymer und cellulosehaltiger Faser nach einem der Ansprüche 1 bis 10, worin die Zusammensetzung 2 bis 4 Gew.-% Gleitmittel enthält, das Polymer ein Polyethylen hoher Dichte und die cellulosehaltige Faser Kiefernholzmehl ist.

12. Zusammensetzung von Polymer und cellulosehaltiger Faser nach einem der Ansprüche 1 bis 10, worin die Zusammensetzung 3 bis 6 Gew.-% Gleitmittel enthält, das Polymer ein Polyethylen hoher Dichte und die cellulosehaltige Faser Eichenholzmehl ist.

13. Zusammensetzung von Polymer und cellulosehaltiger Faser nach einem der Ansprüche 1 bis 12, worin die Zusammensetzung 40 bis 60 Gew.-% Polymer enthält.

14. Zusammensetzung von Polymer und cellulosehaltiger Faser nach einem der Ansprüche 1 bis 13, welche zusätzlich 2 bis 10 Gew.-% Talk umfasst.

15. Verfahren zur Herstellung einer extrudierten Zusammensetzung von Polymer und cellulosehaltiger Faser, umfassend:
a) die Bildung eines Gemisches aus 30 bis 70 Gew.-% Polymer, 70 bis 30 Gew.-% cellulosehaltiger Faser und 1 bis 7 Gew.-% eines Gleitmittels, das eine Mischung von *N*,*N*'-Bisalkanoylethylendiaminen umfasst, welche 8 bis 14 Kohlenstoffatome in jeder Alkanoylgruppe enthalten,
b) das Trocknen des in Schritt (a) erhaltenen Gemisches bis zu einer Feuchte von weniger als 2 Gew.-%,
c) das Extrudieren des in Schritt (b) erhaltenen Gemisches bei einer Temperatur von nicht mehr als 170 °C,
d) das Führen des extrudierten Profils durch eine Kühlkammer, und
e) das Ablängen und Sammeln des Extrudats.

16. Verfahren nach Anspruch 15, worin die cellulosehaltige Faser aus Eiche, Kiefer, Ahorn, Stroh, Maisstängeln, Reisspelzen, Weizen-, Gerste- und Haferspreu, Kokosnussschalen, Erdnussschalen, Walnussschalen, Jute, Hanf, Bagasse, Bambus, Flachs, Kenaf oder einer Kombination hiervon besteht.

17. Verfahren nach Anspruch 15 oder 16, worin die cellulosehaltige Faser ein Fasergemisch mit einem Grössenbereich von 10 bis 100 mesh ist.

18. Verfahren nach einem der Ansprüche 15 bis 17, worin das Polymer ein Polyethylen hoher Dichte ist.

19. Verfahren nach einem der Ansprüche 15 bis 18, worin die Zusammensetzung von Polymer und cellulosehaltiger Faser 60 bis 40 Gew.-% der cellulosehaltigen Faser enthält.

20. Verfahren nach einem der Ansprüche 15 bis 19, worin die Zusammensetzung von Polymer und cellulosehaltiger Faser 40 bis 60 Gew.-% Polymer enthält.

21. Verfahren nach einem der Ansprüche 15 bis 20, worin die Zusammensetzung von Polymer und cellulosehaltiger Faser 2 bis 4 Gew.-% Gleitmittel enthält, das Polymer ein Polyethylen hoher Dichte und die cellulosehaltige Faser Kiefernholzmehl ist.

22. Verfahren nach einem der Ansprüche 15 bis 20, worin die Zusammensetzung von Polymer und cellulosehaltiger Faser 3 bis 6 Gew.-% Gleitmittel enthält, das Polymer ein Polyethylen hoher Dichte und die cellulosehaltige Faser Eichenholzmehl ist.

23. Extrudierte Zusammensetzung von Polymer und cellulosehaltiger Faser, erhältlich nach dem Verfahren gemäss einem der Ansprüche 15 bis 22.

24. Verwendung eines Gemisches von Verbindungen der Formel 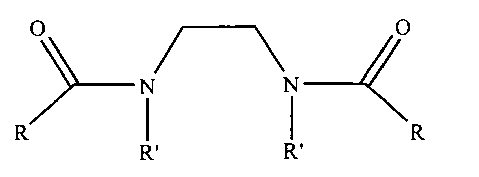 worin die -C(=O)R-Gruppen unabhängig voneinander C₈₋₁₄-Alkanoyl sind und R' H oder C₁₋₈-Alkyl ist, mit einer Teilchengrösse im Bereich von 90 bis 150 µm, vorzugsweise 120 bis 140 µm, als Gleitmittel in Zusammensetzungen von Polymer und cellulosehaltiger Faser.

25. Verwendung nach Anspruch 24, worin die -C(=O)R-Gruppen unabhängig voneinander aus der aus Capryloyl, Caprinoyl, Lauroyl and Myristoyl bestehenden Gruppe ausgewählt sind.

## Revendications

1. Composition de polymère-fibre cellulosique comprenant un mélange de 30 à 70 % en poids d'un polymère, de 70 à 30 % en poids d'une matière fibreuse cellulosique et de 1 à 7 % en poids d'un agent lubrifiant, ledit agent lubrifiant comprenant un mélange de *N,N'*-bisalcanoyléthylènediamines renfermant indépendamment de 8 à 14 atomes de carbone dans chaque groupe alcanoyle.

2. Composition de polymère-fibre cellulosique selon la revendication 1, dans laquelle l'agent lubrifiant comprend au moins une *N*,*N*'-bisalcanoyléthylènediamine renfermant 12 atomes de carbone dans au moins un groupe alcanoyle.

3. Composition de polymère-fibre cellulosique selon la revendication 1 ou 2, dans laquelle le mélange de *N*,*N*'-bisalcanoyléthylènediamines comprend au moins une chacune des *N*,*N*'-bisalcanoyléthylènediamines renfermant 8, 10, 12 et 14 atomes de carbone, respectivement, dans au moins l'un de leurs groupes alcanoyle.

4. Composition de polymère-fibre cellulosique selon l'une quelconque des revendications 1 à 3, dans laquelle le groupe alcanoyle le plus abondant dans le mélange de *N*,*N*-bisalcanoyléthylènediamines est un groupe alcanoyle renfermant 12 atomes de carbone.

5. Composition de polymère-fibre cellulosique selon l'une quelconque des revendications 1 à 4, dans laquelle l'agent lubrifiant est un solide et la taille de particules de l'agent lubrifiant est de 90 à 150 µm, de préférence de 120 à 140 µm.

6. Composition de polymère-fibre cellulosique selon l'une quelconque des revendications 1 à 5, dans laquelle la température de fusion effective de l'agent lubrifiant, à une vitesse de chauffage de 100 °C par minute durant l'extrusion, est inférieure à 160 °C.

7. Composition de polymère-fibre cellulosique selon l'une quelconque des revendications 1 à 6, dans laquelle le polymère est un polyéthylène à haute densité.

8. Composition de polymère-fibre cellulosique selon l'une quelconque des revendications 1 à 7, dans laquelle la matière fibreuse cellulosique est choisie parmi des matières fibreuses dérivées du bois de chêne, de pin ou d'érable, de la paille, de tiges de maïs ou de balles de riz, de la balle de blé, d'orge ou d'avoine, de coquilles de noix de coco, de cacahuète ou de noix, du jute, du chanvre, de la bagasse, du bambou, du lin, du kenaf, ou de toute combinaison des éléments précédents quelconques.

9. Composition de polymère-fibre cellulosique selon l'une quelconque des revendications 1 à 8, dans laquelle la fibre cellulosique est la fibre de bois.

10. Composition de polymère-fibre cellulosique selon l'une quelconque des revendications 1 à 9, la composition contenant de 60 à 40 % en poids de la fibre cellulosique.

11. Composition de polymère-fibre cellulosique selon l'une quelconque des revendications 1 à 10, la composition contenant de 2 à 4 % en poids de l'agent lubrifiant, le polymère étant un polyéthylène à haute densité et la fibre cellulosique étant de la farine de bois de pin.

12. Composition de polymère-fibre cellulosique selon l'une quelconque des revendications 1 à 10, la composition contenant de 3 à 6 % en poids de l'agent lubrifiant, le polymère étant un polyéthylène à haute densité et la fibre cellulosique étant de la farine de bois de chêne.

13. Composition de polymère-fibre cellulosique selon l'une quelconque des revendications 1 à 12, la composition contenant de 40 à 60 % en poids du polymère.

14. Composition de polymère-fibre cellulosique selon l'une quelconque des revendications 1 à 13, comprenant en outre de 2 % à 10 % en poids de talc.

15. Procédé de préparation d'une composition de polymère-fibre cellulosique extrudée, comprenant :
a) la formation d'un mélange de 30 à 70 % en poids d'un polymère, de 70 à 30 % en poids de fibre cellulosique et de 1 à 7 % en poids d'un agent lubrifiant comprenant un mélange de *N*,*N*'-bisalcanoyléthylènediamines renfermant de 8 à 14 atomes de carbone dans chaque groupe alcanoyle ;
b) le séchage du mélange obtenu dans l'étape (a) jusqu'à un niveau d'humidité inférieur à 2 % en poids ;
c) l'extrusion du mélange obtenu dans l'étape (b) à une température d'au plus 170 °C ;
d) le passage du profilé extrudé à travers une enceinte de refroidissement ; et
e) la découpe et la collecte de l'extrudat.

16. Procédé selon la revendication 15, dans lequel la fibre cellulosique est du chêne, du pin, de l'érable, de la paille, des tiges de maïs, des balles de riz, de la balle de blé, d'orge et d'avoine, des coquilles de noix de coco, des coquilles de cacahuète, des coquilles de noix, du jute, du chanvre, de la bagasse, du bambou, du lin, du kenaf, ou une combinaison de ceux-ci.

17. Procédé selon la revendication 15 ou 16, dans lequel la fibre cellulosique est un mélange de fibres de tailles variant de 10 à 100 mesh.

18. Procédé selon l'une quelconque des revendications 15 à 17, dans lequel le polymère est du polyéthylène à haute densité.

19. Procédé selon l'une quelconque des revendications 15 à 18, dans lequel la composition de polymère-fibre cellulosique contient de 60 à 40 % en poids de la fibre cellulosique.

20. Procédé selon l'une quelconque des revendications 15 à 19, dans lequel la composition de polymère-fibre cellulosique contient de 40 à 60 % en poids du polymère.

21. Procédé selon l'une quelconque des revendications 15 à 20, dans lequel la composition de polymère-fibre cellulosique contient de 2 à 4 % en poids de l'agent lubrifiant, le polymère est un polyéthylène à haute densité et la fibre cellulosique est de la farine de bois de pin.

22. Procédé selon l'une quelconque des revendications 15 à 20, dans lequel la composition de polymère-fibre cellulosique contient de 3 à 6 % en poids de l'agent lubrifiant, le polymère est un polyéthylène à haute densité et la fibre cellulosique est de la farine de bois de chêne.

23. Composition de polymère-fibre cellulosique extrudée pouvant être obtenue par le procédé selon l'une quelconque des revendications 15 à 22.

24. Utilisation d'un mélange des composés de formule : 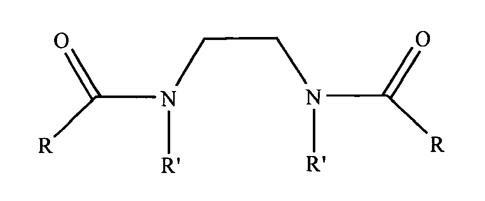 dans laquelle chaque fragment -C(=O)R est indépendamment un groupe alcanoyle en C₈₋₁₄ et R' est un atome d'hydrogène ou un groupe alkyle en C₁₋₈, présentant une plage de tailles de particules de 90 à 150 µm, de préférence de 120 à 140 µm, en tant qu'agent lubrifiant dans des compositions de polymère-fibre cellulosique.

25. Utilisation selon la revendication 24, dans laquelle les fragments -C(=O)R sont choisis indépendamment parmi le groupe constitué d'un groupe capryloyle, d'un groupe caprinoyle, d'un groupe lauroyle et d'un groupe myristoyle.
